(19) Europäisches Patentamt
European Patent Office
Office européen des brevets

(11) Veröffentlichungsnummer: **0 112 281**
**B1**

(12) # EUROPÄISCHE PATENTSCHRIFT

(45) Veröffentlichungstag der Patentschrift: **08.04.87**

(51) Int. Cl.⁴: **C 09 B 55/00** // C09B45/16, D06P3/06

(21) Anmeldenummer: **83810515.3**

(22) Anmeldetag: **10.11.83**

(54) **Unsymmetrische 1:2-Chromkomplexfarbstoffe, enthaltend eine Azo- und eine Azomethinverbindung.**

(30) Priorität: **16.11.82 CH 6666/82**

(43) Veröffentlichungstag der Anmeldung: **27.06.84 Patentblatt 84/26**

(45) Bekanntmachung des Hinweises auf die Patenterteilung: **08.04.87 Patentblatt 87/15**

(84) Benannte Vertragsstaaten: **CH DE FR GB IT LI**

(56) Entgegenhaltungen:
**EP-A-0 066 230**
**FR-A-2 174 926**
**FR-A-2 270 302**
**US-A-2 985 646**

(73) Patentinhaber: **CIBA- GEIGY AG, Klybeckstrasse 141, CH- 4002 Basel (CH)**

(72) Erfinder: **Beffa, Fabio, Dr., Burgstrasse 38, CH-4125 Riehen (CH)**

EP 0 112 281 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Gegenstand der vorliegenden Erfindung sind 1:2-Chromkomplexfarbstoffe der Formel 1

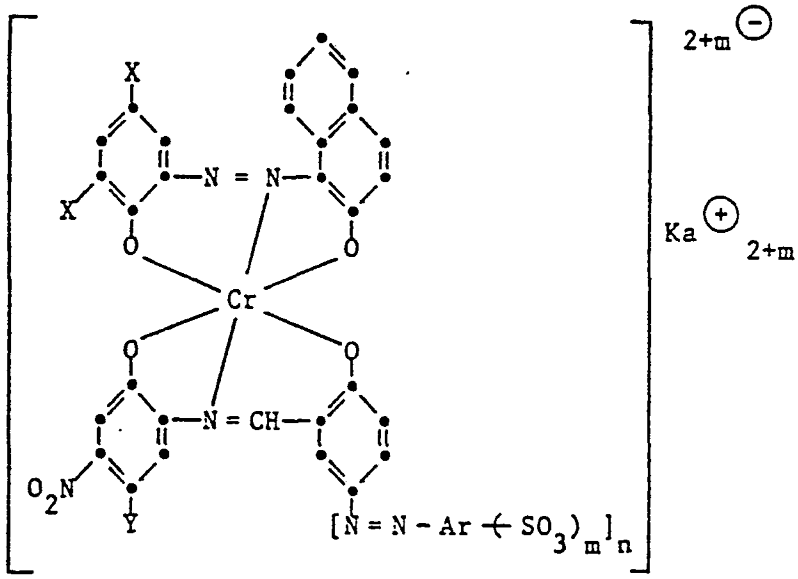

(I)

worin
ein X Nitro und das andere Sulfo,
Y Wasserstoff, Chlor oder Methyl,
Ar eine gegebenenfalls substituierte Arylgruppe, wobei die Carboxygruppe in o-Stellung zur Azogruppe sowie die Nitrogruppe als Substituenten ausgeschlossen sind,
m 0, 1 oder 2,
n 0 oder 1 und
Ka$^{\oplus}$ ein Kation bedeutet

Es sind bereits z.B. aus der FR-A 2,174,926 1:2-Chromkomplexfarbstoffe, enthaltend eine Azo- und eine Azomethinverbindung bekannt. Diese vermögen jedoch nicht alle Wünsche bezüglich Echtheiten voll zu erfüllen. Insbesondere die Lichtechtheit der auf Leder erhaltenen Färbungen ist oft unbefriedigend.

Der vorliegenden Erfindung lag die Aufgabe zugrunde, Farbstoffe zur Verfügung zu stellen, welche Leder in braunen Tönen mit guter Lichtechtheit färben. Diese Aufgabe wird durch die erfindungsgemässen Farbstoffe gelöst.

In den erfindungsgemässen Farbstoffen der oben aufgeführten Formel 1 leitet sich die Diazokomponente von 1-Hydroxy-2-amino-4-nitrobenzol-6-sulfosäure oder von 1-Hydroxy-2-amino-6-nitrobenzol-4-sulfosäure ab.

Als Amin für den Azomethinfarbstoff kommen folgende Verbindungen in Frage:

1-Hydroxy-2-amino-5-nitrobenzol, 1-Hydroxy-2-amino-4-chlor-5-nitrobenzol oder 1-Hydroxy-2-amino-4-methyl-5-nitrobenzol.

Als Aldehyd für den Azomethinfarbstoff kommt 2-Hydroxybenzaldehyd in Frage oder vorzugsweise 2-Hydroxybenzaldehyd, der in p-Stellung zur Hydroxygruppe eine gegebenenfalls substituierte Arylazogruppe trägt.

Unter Arylgruppen sind vor allem die Phenyl- und die Naphthylgruppe zu verstehen und als Substituenten kommen Halogen, wie z.B. Chlor oder Brom, $C_1$-$C_4$-Alkyl, $C_1$-$C_4$-Alkoxy, Sulfo sowie Carboxy in Betracht, wobei die Carboxygruppe nicht in o-Stellung zur Azogruppe stehen darf.

Besonders bevorzugte Arylgruppen sind die unsubstituierte oder durch Chlor, Methyl, Methoxy oder Sulfo substituierte Phenylgruppe sowie die unsubstituierte oder durch Sulfo substituierte Naphthylgruppe.

Die 1:2-Chromkomplexfarbstoffe der Formel 1 tragen insgesamt 1 bis 3 Sulfogruppen.

Ka$^{\oplus}$ stellt ein Kation, beispielsweise ein Alkalikation, wie Lithium, Kalium oder vorzugsweise Natrium, dar. Ferner kann Ka$^{\oplus}$ ein Ammoniumkation oder das Ammoniumsalz eines organischen Amins sein.

Von besonderer Bedeutung wegen ihrer guten färberischen Eigenschaften sind die 1:2-Chromkomplexfarbstoffe der Formel II

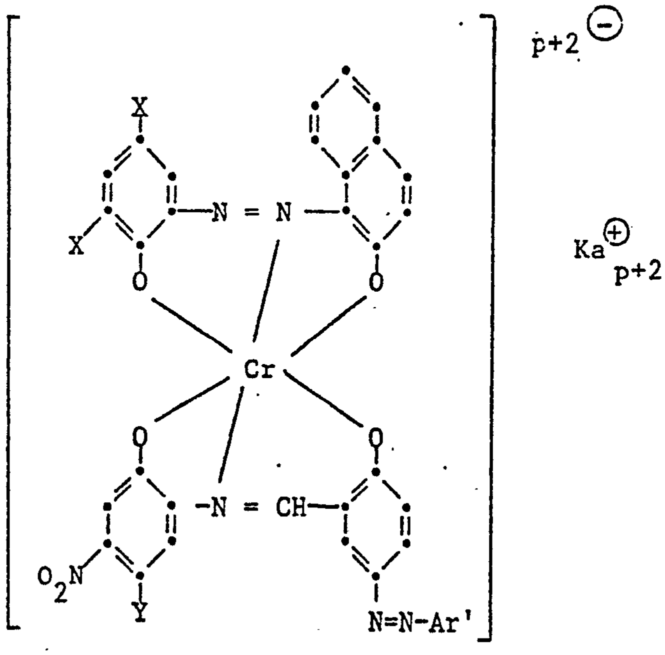

(II)

worin

ein X Nitro und das andere Sulfo,

Y Wasserstoff, Chlor oder Methyl,

Ar' unsubstituiertes oder durch Chlor, Methyl, Methoxy oder Sulfo substituiertes Phenyl oder durch Sulfo substituiertes Naphthyl,

Ka$^{\ominus}$ ein Kation und

p die Anzahl der ausser der Gruppe X vorhandenen Sulfogruppen bedeutet, wobei die Farbstoffe insgesamt 1 bis 3 Sulfogruppen aufweisen.

Die erfindungsgemässen Farbstoffe können nach an sich bekannten Methoden hergestellt werden, beispielsweise indem man den 1:1-Chromkomplex des Azofarbstoffes herstellt und diesen dann mit dem Azomethinfarbstoff oder vorzugsweise mit einem Gemisch des entsprechenden Amins und Aldehyds umsetzt.

Die Herstellung des 1:1-Chromkomplexes wird nach an sich bekannten Methoden, vorzugsweise in saurer Lösung mit Chrom-III-salzen durchgeführt. Anschliessend wird der 1:1-Chromkomplex in schwach saurem, neutralem oder schwach alkalischem Medium zum 1:2-Chromkomplex umgesetzt.

Es ist auch möglich, Gemische der 1:1-Chromkomplexe der beiden Azofarbstoffe und/oder von 2 oder mehreren Azomethinfarbstoffen bzw. Aminen und Aldehyden einzusetzen, so dass man Mischungen von 1:2-Chromkomplexfarbstoffen erhält.

Die nach dem obigen Verfahren erhältlichen neuen Metallkomplexfarbstoffe der Formel I, werden in Form ihrer Salze, insbesondere Alkali-, vor allem Natrium- oder Lithiumsalze, oder auch Ammoniumsalze oder Salze von organischen Aminen mit positiv geladenem Stickstoffatom isoliert und eignen sich zum Färben und Bedrucken verschiedener Stoffe, gegebenenfalls in Gegenwart eines Egalisierhilfmittels, vor allem aber zum Färben und Bedrucken stickstoffhaltiger Materialien, wie Seide, Wolle, sowie auch für synthetische Fasern aus Polyamiden oder Polyurethanen und insbesondere für Leder.

Man erhält braune Färbungen mit guten Echtheiten, insbesondere Licht- und Nassechtheiten.

Die bevorzugte Verwendung der erfindungsgemässen Farbstoffe liegt im Färben von Wolle, Polyamid und insbesondere von Pelzen oder Leder, wobei alle Ledersorten geeignet sind, z.B. Chromleder, nachgegerbtes Leder oder Velourleder von Ziege, Rind oder Schwein.

Die nachfolgenden Beispiele dienen der Erläuterung der Erfindung, ohne sie darauf zu beschränken. Teile bedeuten Gewichtsteile und Prozente Gewichtsprozente. Die Temperaturen sind in Grad Celsius angegeben.

**Beispiel 1:**

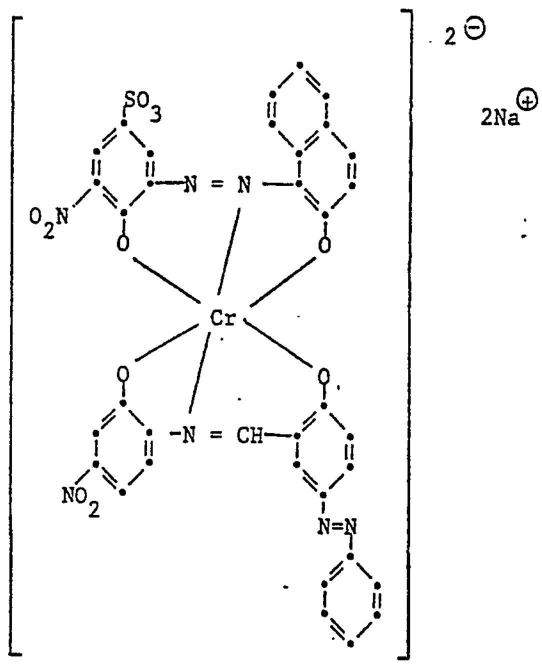

Der 1:1-Chromkomplex, der 38,9 Teile des Farbstoffes aus diazotierter 6-Nitro-2-amino-1-hydroxybenzol-4-sulfonsäure und 2-Hydroxynaphthalin sowie 5,2 Teile Chrom enthält, wird in 500 Teile Wasser eingetragen und mit 15,4 Teilen 5-Nitro-2-amino-1-hydroxybenzol und 22,6 Teilen des Monoazofarbstoffes aus diazotiertem Anilin und Salicylaldehyd versetzt und unter Rühren bei pH 7-7,5 und 85-90° gehalten, bis die Bildung des asymmetrischen 1:2-Komplexfarbstoffes beendet ist. Nach beendeter Reaktion wird der Farbstoff durch Natriumchloridzugabe abgeschieden, abfiltriert und getrocknet. Er stellt ein dunkles Pulver dar, das sich in Wasser mit brauner Farbe löst und Leder, Polyamid oder Wolle in braunen Tönen von guten Echtheiten färbt.

**Beispiel 2:**

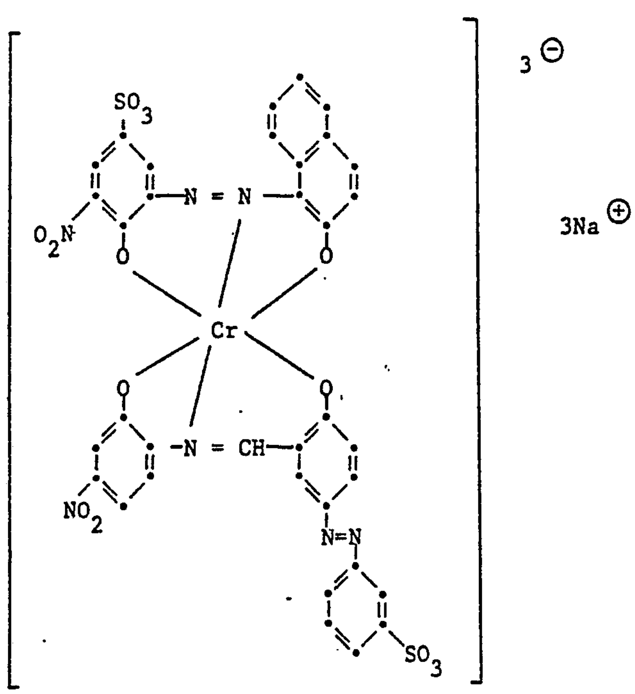

Der 1:1-Chromkomplex, der 38,9 Teile des Farbstoffes aus diazotierter 6-Nitro-2-amino-1-hydroxybenzol-4-sulfonsäure und 2-Hydroxynaphthalin sowie 5,2 Teile Chrom enthält, wird in 450 Teile Wasser eingetragen und mit 15,4 Teilen 5-Nitro-2-amino-1-hydroxybenzol und 30,6 Teilen des Monoazofarbstoffes aus diazotierter Anilin-3-sulfonsäure und Salicylaldehyd versetzt und bei pH 7-7,5 und 85-90° so lange gerührt, bis die Ausgangsprodukte nicht mehr nachweisbar sind. Anschliessend wird das Wasser durch Eindampfen oder Sprühtrocknung entfernt. Man erhält ein dunkles Pulver, das sich in Wasser mit brauner Farbe löst und Leder in sehr lichtechten dunkelbraunen Tönen färbt.

**Beispiel 3**:

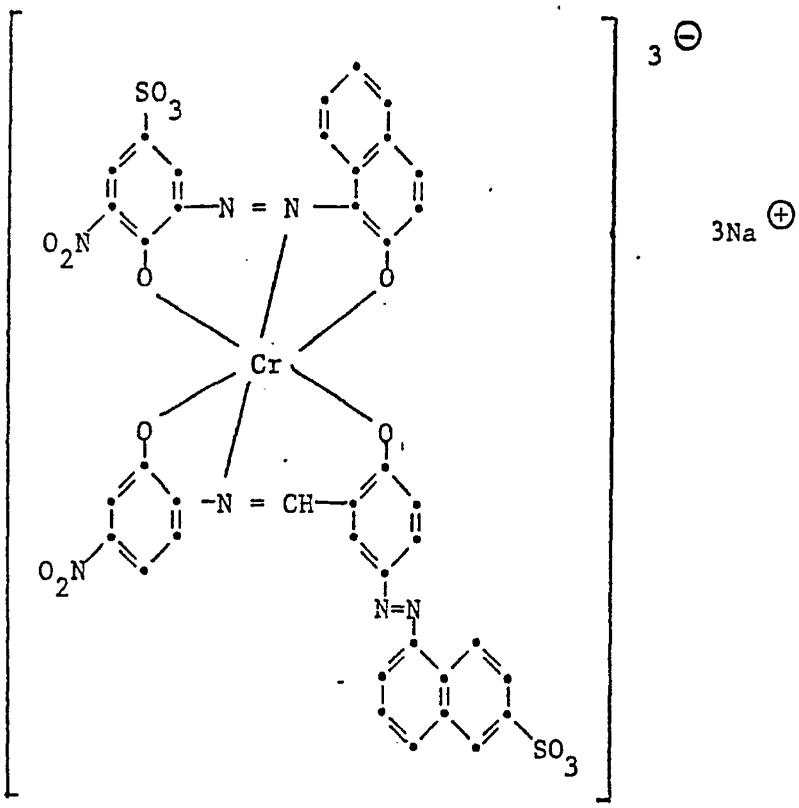

In 500 Teilen Wasser suspendiert man 43,9 Teile der komplexen Chromverbindung von Typus 1 Atom Chrom : 1 Molekül Farbstoff, welche 5,2 Teile Chrom und 38,9 Teile Monoazofarbstoff aus diazotierter 6-Nitro-2-amino-1-hydroxybenzol-4-sulfonsäure und 2-Hydroxynaphthalin enthält mit 15,4 Teilen 5-Nitro-2-amino-1-hydroxybenzol und 35,6 Teilen des Monoazofarbstoffes aus diazotierter 1-Amino-naphthalin-6-sulfonsäure und Salicylaldehyd. Das Reaktionsgemisch wird auf 90-95°C erwärmt, mit Natriumhydroxid auf pH 7-7,5 gestellt und so lange bei dieser Temperatur und konstantem pH gehalten, bis die Ausgangsprodukte nicht mehr nachweisbar sind. Nach beendeter Reaktion wird der Farbstoff durch Eindampfen isoliert. Man erhält ein dunkles Pulver, das sich in Wasser mit brauner Farbe löst und Leder in sehr lichtechten dunkelbraunen Tönen färbt.

Arbeitet man wie in den Beispielen 1 - 3 beschrieben und verwendet den 1:1-Chromkomplex des in Spalte 2 der folgenden Tabelle aufgeführten Azofarbstoffes und anstelle der dort eingesetzten Amine und Aldehyde die in Spalte 3 der folgenden Tabelle aufgeführten Azomethinfarbstoffe bzw. die ihnen zugrunde liegenden Amine und Aldehyde, so erhält man Farbstoffe, welche Leder in braunen bis dunkelbraunen Tönen mit guten Echtheiten färben.

**Tabelle 1**

| No. | Azofarbstoff | Azomethinfarbstoff |
|---|---|---|
| 1 | 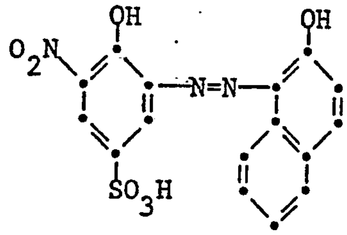 | 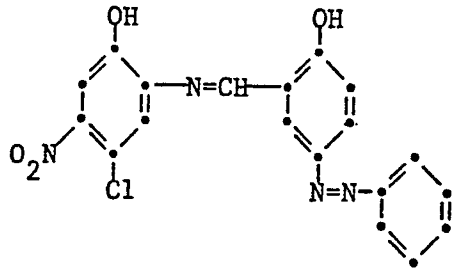 |
| 2 | 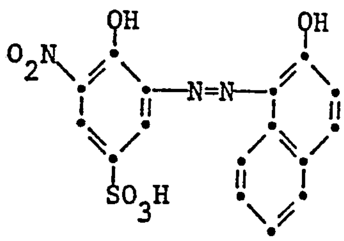 | 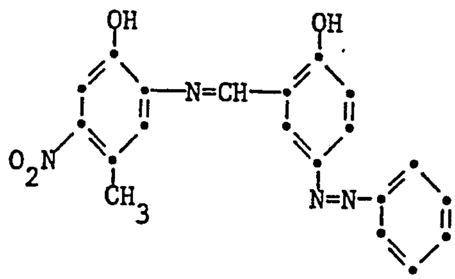 |
| 3 | 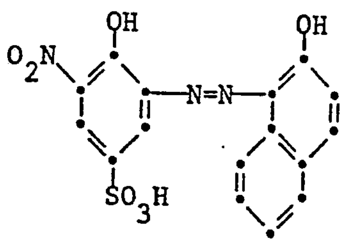 | 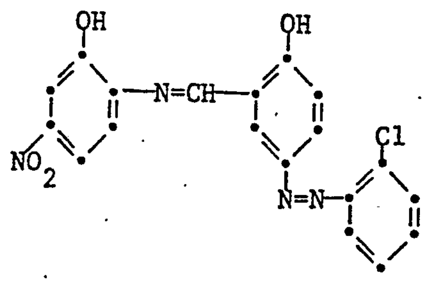 |

| No. | Azofarbstoff | Azomethinfarbstoff |
|---|---|---|
| 4 | 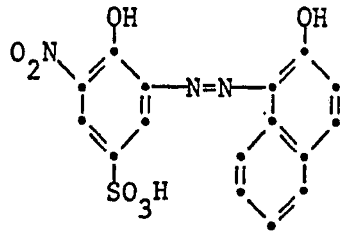 | 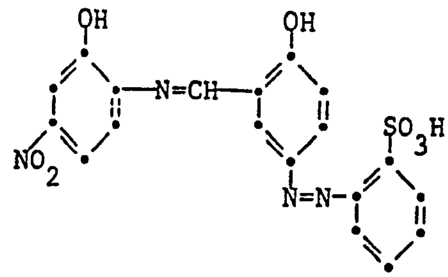 |
| 5 | 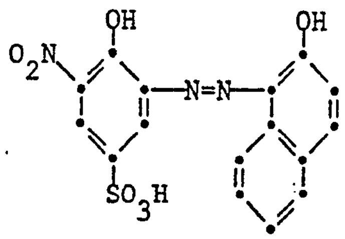 | 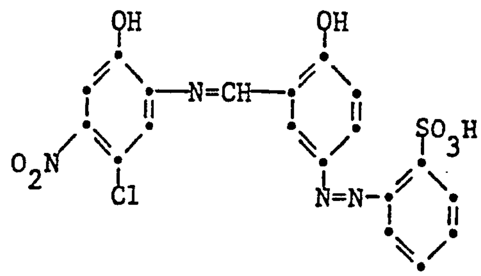 |
| 6 | 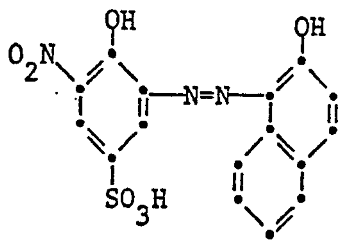 | 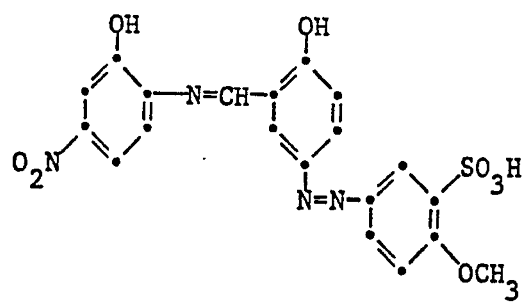 |
| 7 | 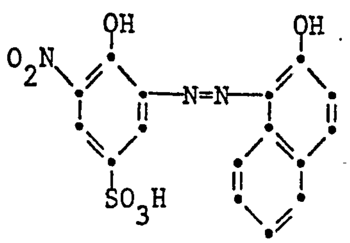 | 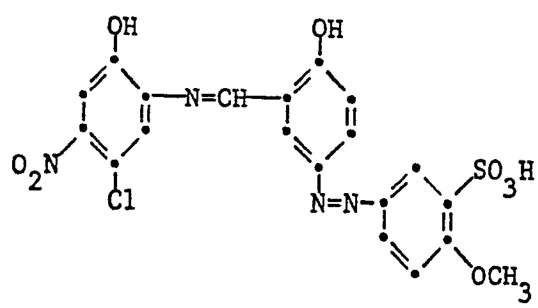 |
| 8 | 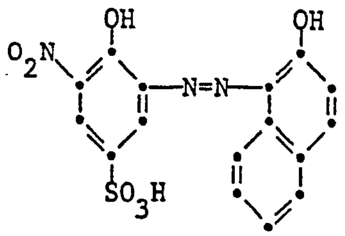 | 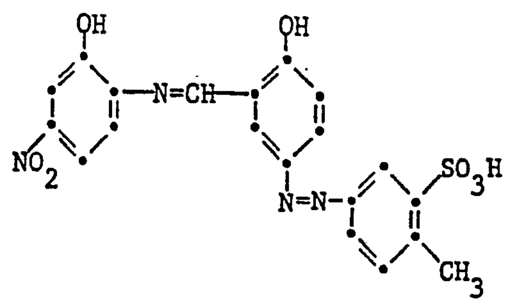 |

| No. | Azofarbstoff | Azomethinfarbstoff |
|---|---|---|
| 9 | 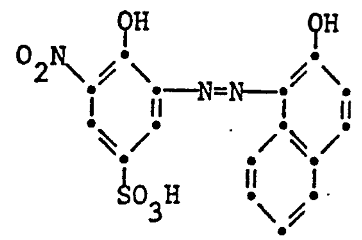 | 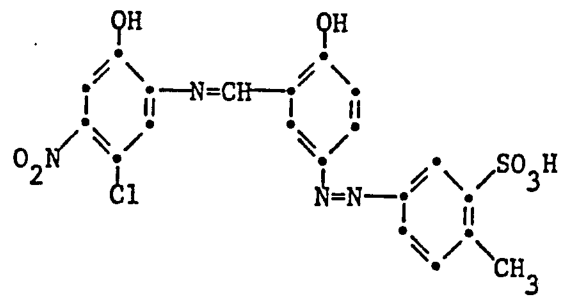 |
| 10 | 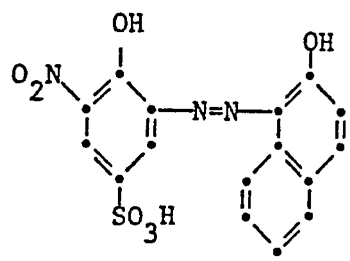 | 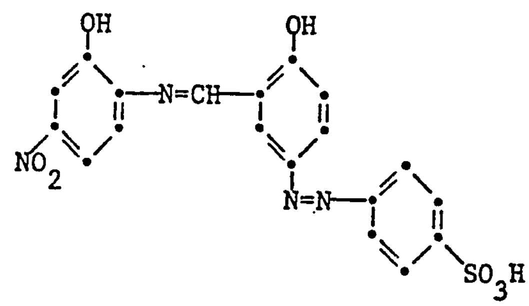 |
| 11 | 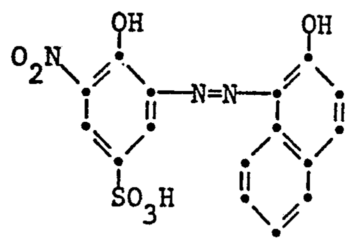 | 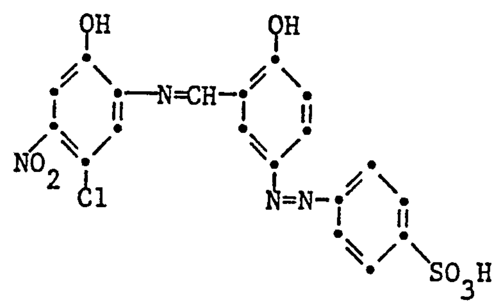 |
| 12 | 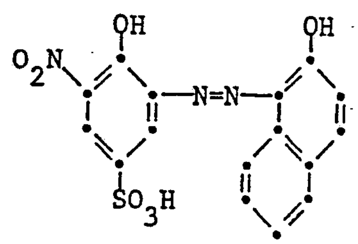 | 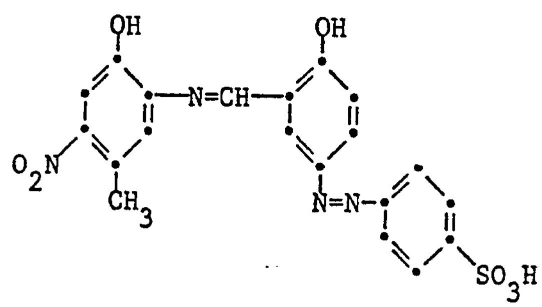 |
| 13. | 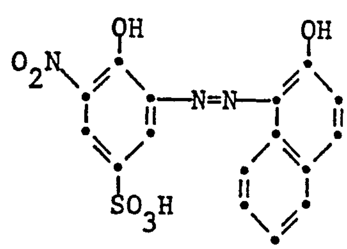 | 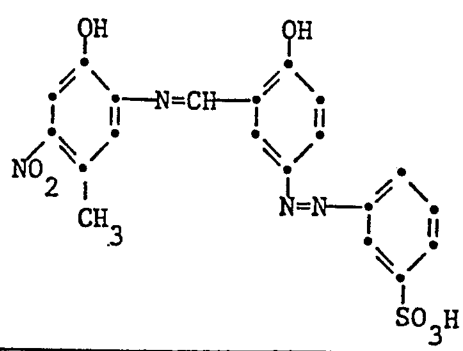 |

| No. | Azofarbstoff | Azomethinfarbstoff |
|---|---|---|
| 14 | 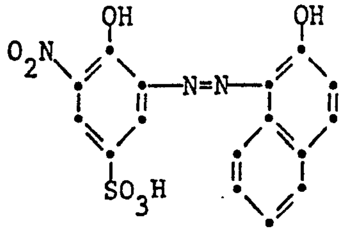 | 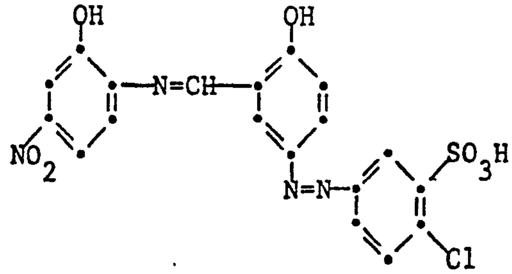 |
| 15 | 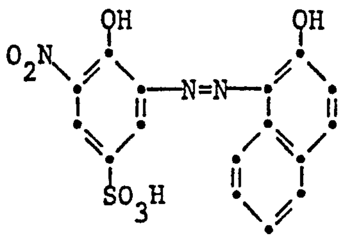 | 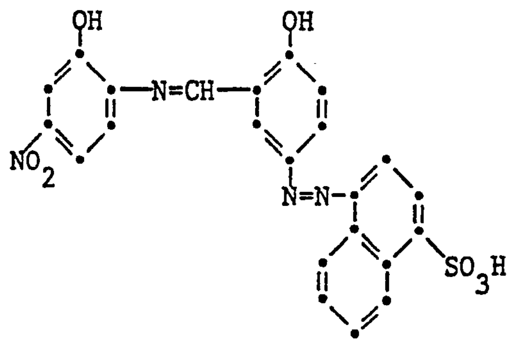 |
| 16 | 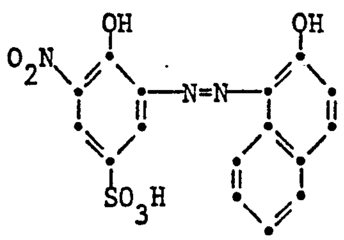 | 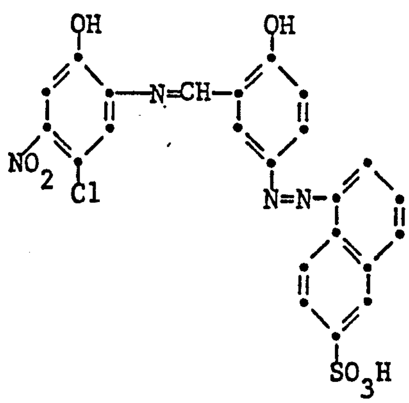 |
| 17 | 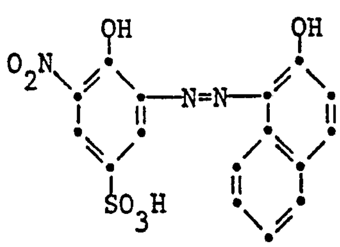 | 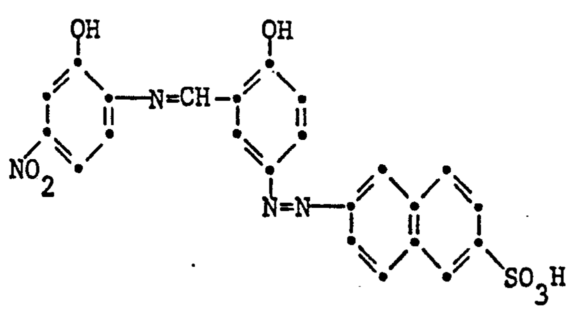 |

| No. | Azofarbstoff | Azomethinfarbstoff |
|---|---|---|
| 18 | 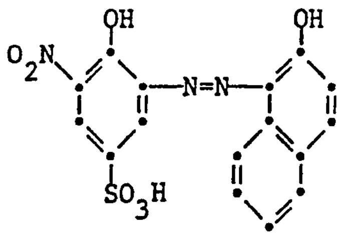 | 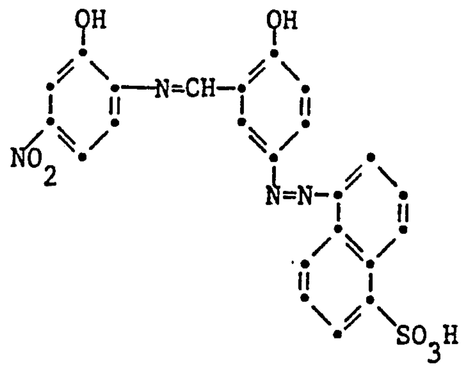 |
| 19 | 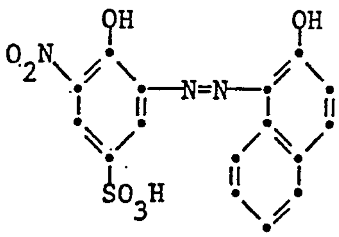 | 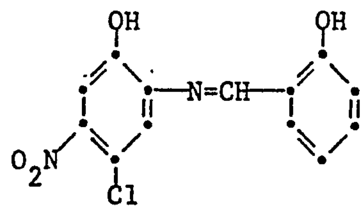 |
| 20 | 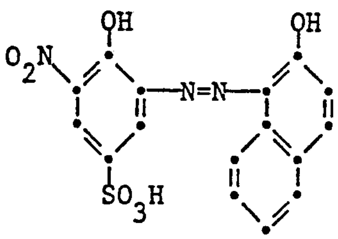 | 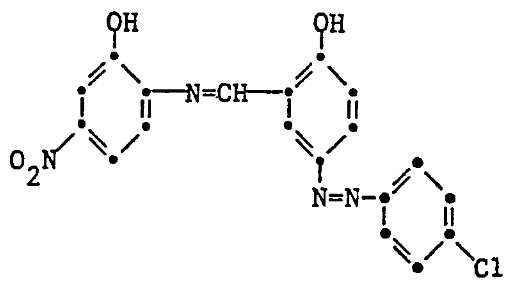 |
| 21 | 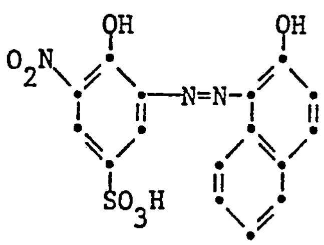 | 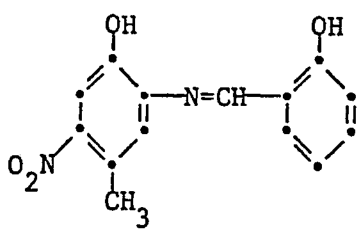 |
| 22 | 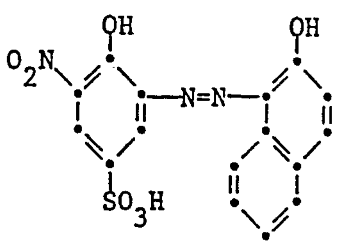 | 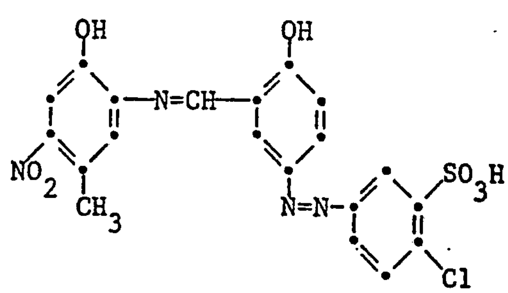 |

| No. | Azofarbstoff | Azomethinfarbstoff |
|---|---|---|
| 23 | 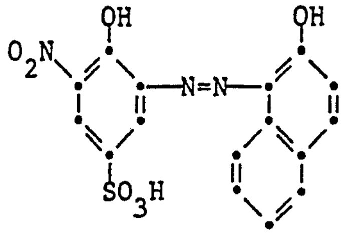 | 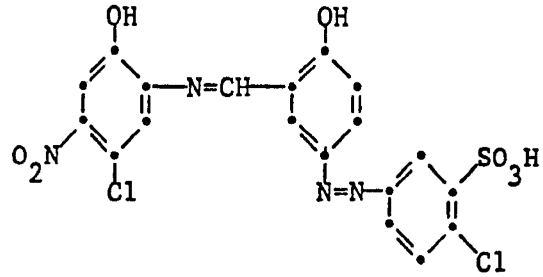 |
| 24 | 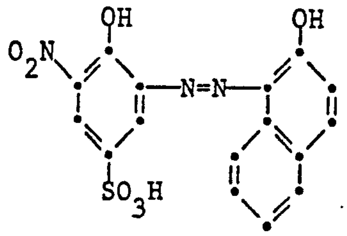 | 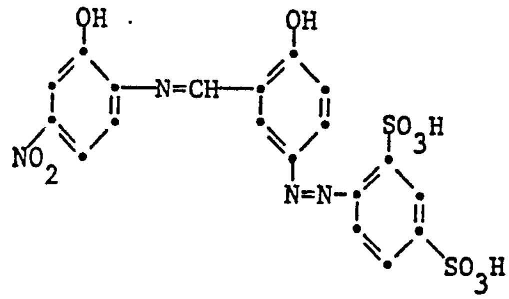 |
| 25 | 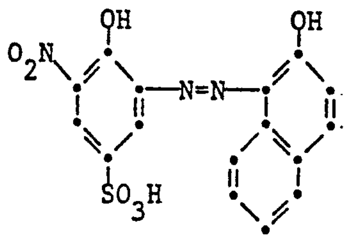 | 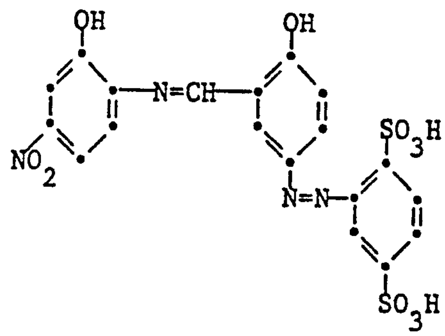 |
| 26 | 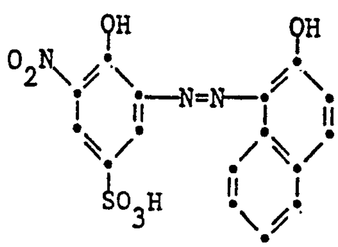 | 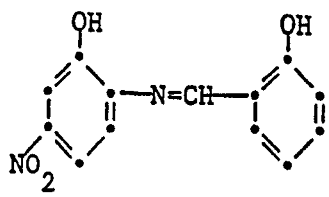 |
| 27 | 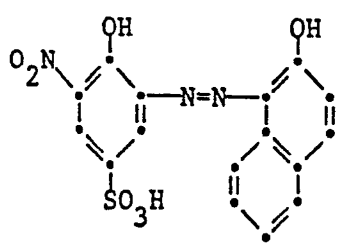 | 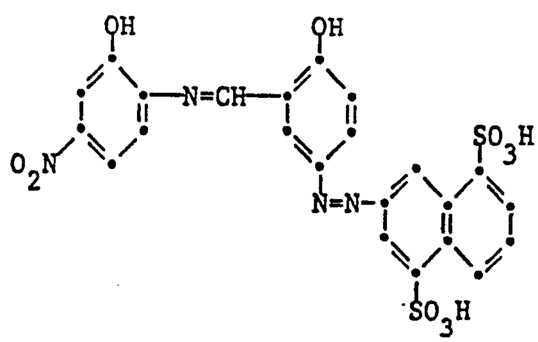 |

| No. | Azofarbstoff | Azomethinfarbstoff |
|---|---|---|
| 28 | 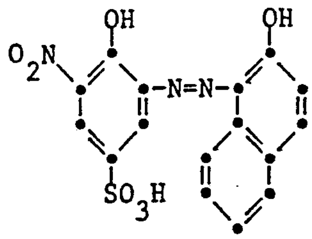 | 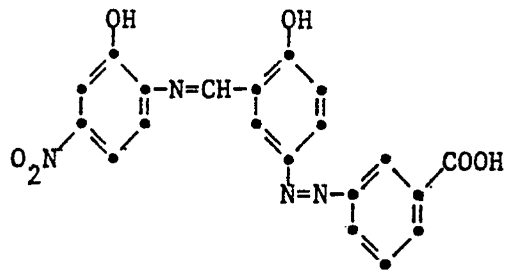 |
| 29 | 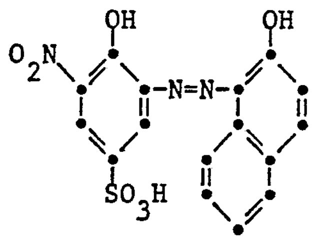 | 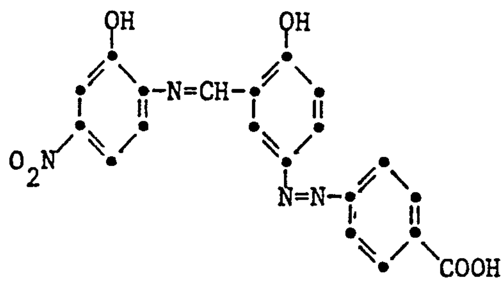 |
| 30 | 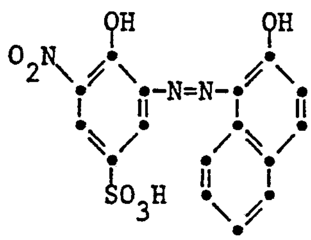 | 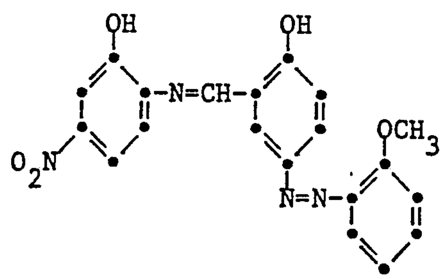 |
| 31 | 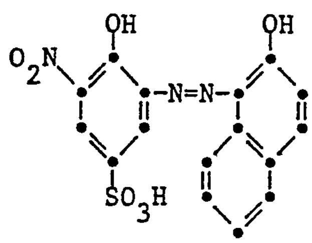 | 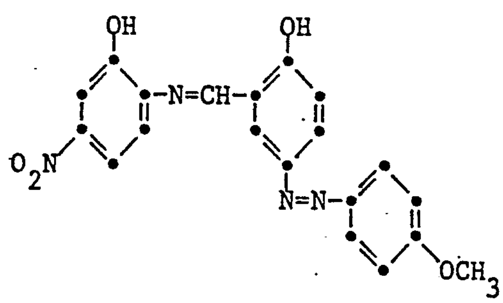 |
| 32 | 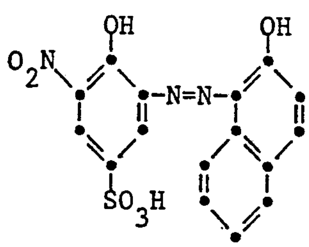 | 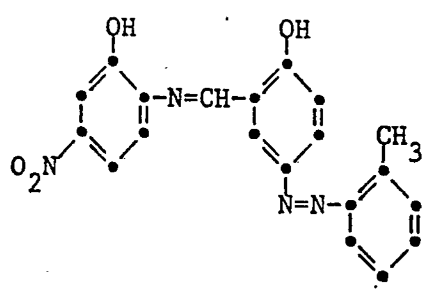 |

| No. | Azofarbstoff | Azomethinfarbstoff |
|---|---|---|
| 33 | 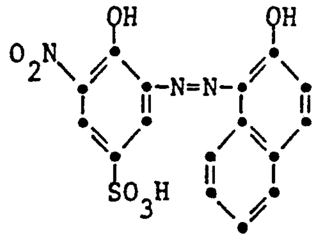 | 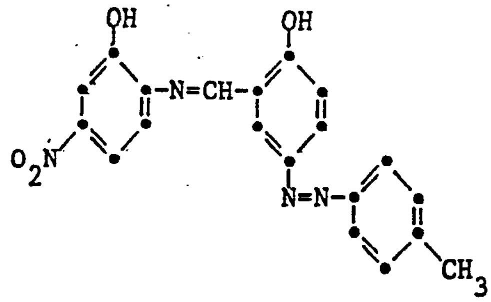 |
| 34 | 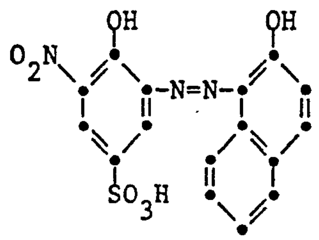 | 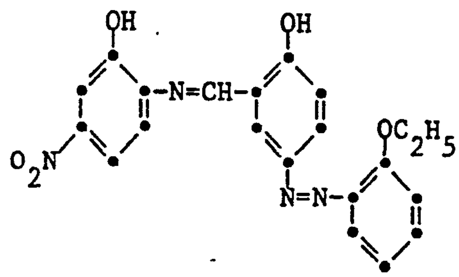 |

**Beispiel 4**:

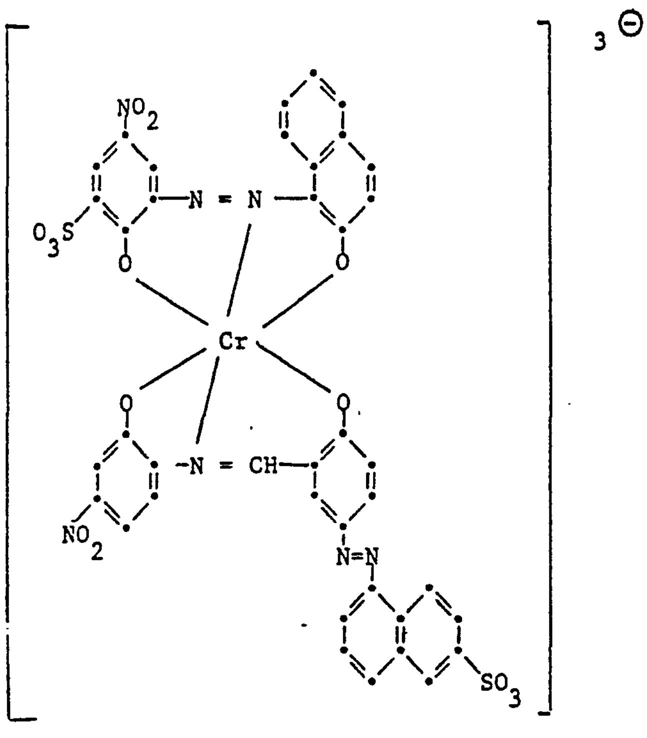

3Na$^{\oplus}$

In 600 Teilen Wasser suspendiert man 43,9 Teile der komplexen Chromverbindung vom Typus 1 Atom Chrom: 1 Molekül Farbstoff, welche 5,2 Teile Chrom und 38,9 Teile Monoazofarbstoff aus diazotierter 4-Nitro-2-amino-1-hydroxybenzol-6-sulfonsäure und 2-Hydroxynaphthalin enthält, mit 15,4 Teilen 5-Nitro-2-amino-1-hydroxybenzol und 35,6 Teilen des Monoazofarbstoffes aus diazotierter 1-Aminonaphthalin-6-sulfonsäure und Salicylaldehyd. Das Reaktionsgemisch wird auf 90 - 95° erwärmt, mit Natriumhydroxid auf pH 7-7,5 gestellt und so lange bei dieser Temperatur und diesem pH gehalten, bis die Ausgangsprodukte nicht mehr nachweisbar sind. Nach beendeter Reaktion wird der Farbstoff durch Sprühtrocknen isoliert. Man erhält ein dunkles Pulver, das sich in Wasser mit brauner Farbe löst und Leder in sehr lichtechten dunkelbraunen Tönen färbt.

**Beispiel 5**:

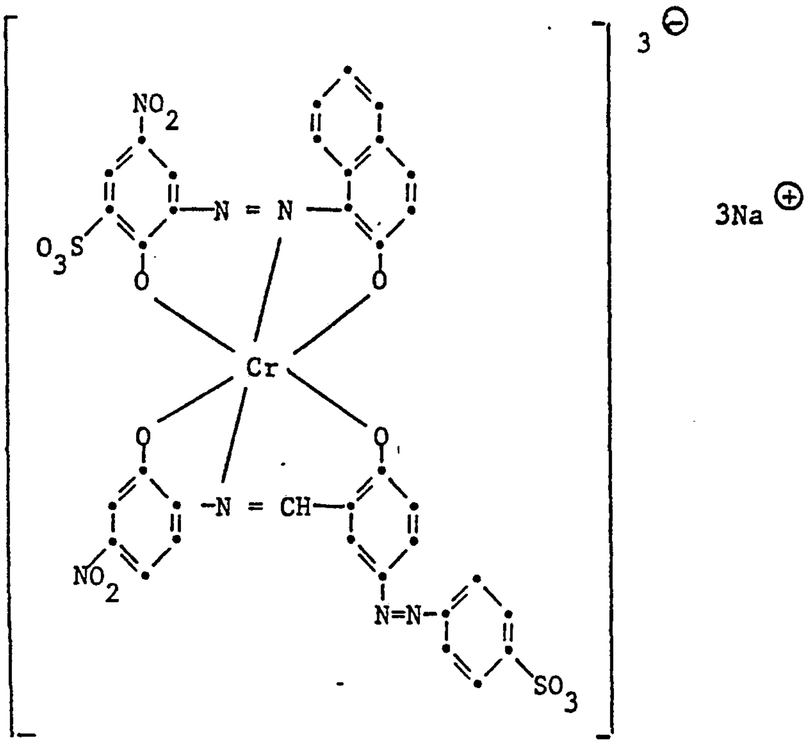

Der 1:1-Chromkomplex, der 38,9 Teile des Farbstoffes aus diazotierter 4-Nitro-2-amino-1-hydroxybenzol-6-sulfonsäure und 2-Hydroxynaphthalin sowie 5,2 Teile Chrom enthält, wird in 450 Teilen Wasser eingetragen und mit 15,4 Teilen 5-Nitro-2-amino-1-hydroxybenzol und 30,6 Teilen des Monoazofarbstoffes aus diazotierter Anilin-4-sulfonsäure und Salicylaldehyd versetzt und unter Rühren bei pH 7-7,5 und 80-85° gehalten, bis die Bildung des 1:2-Chromkomplexes beendet ist. Anschliessend wird das Wasser durch Eindampfen oder Sprühtrocknung entfernt. Man erhält ein dunkles Pulver, das sich in Wasser mit brauner Farbe löst und Leder in sehr lichtechten dunkelbraunen Tönen färbt.

Arbeitet man wie im den Beispielen 4 und 5 beschrieben und verwendet den 1:1-Chromkomplex des in Spalte 2 der folgenden Tabelle aufgeführten Azofarbstoffes und anstelle der dort eingesetzten Amine und Aldehyde die in Spalte 3 der folgenden Tabelle aufgeführten Azomethinfarbstoffe bzw. die ihnen zugrunde liegenden Amine und Aldehyde, so erhält man Farbstoffe, welche Leder in braunen bis dunkelbraunen Tönen mit guten Echtheiten färben.

**Tabelle 2**

| No. | Azofarbstoff | Azomethinfarbstoff |
|---|---|---|
| 1 | 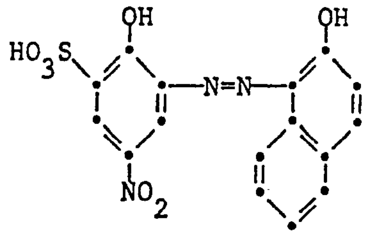 | 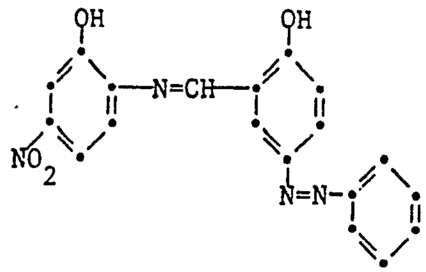 |
| 2 | 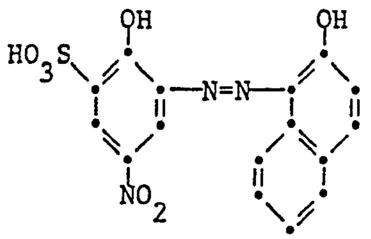 | 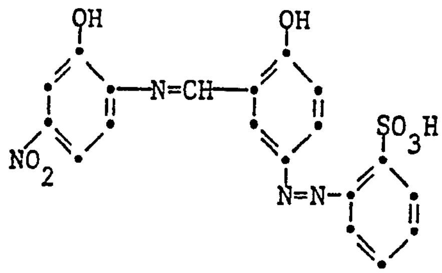 |
| 3 | 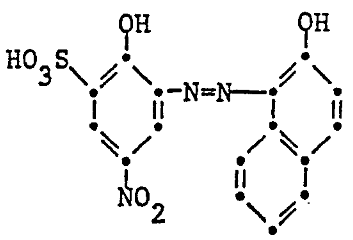 | 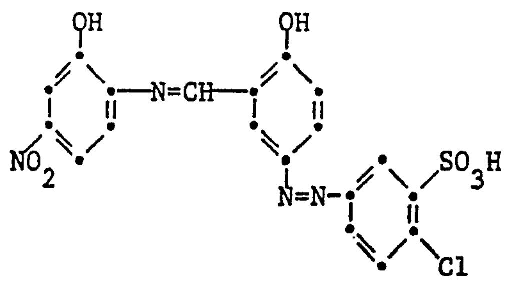 |
| 4 | 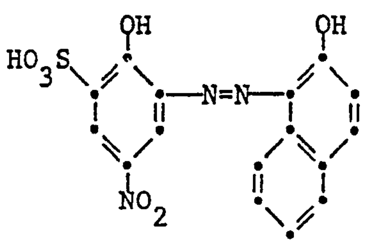 | 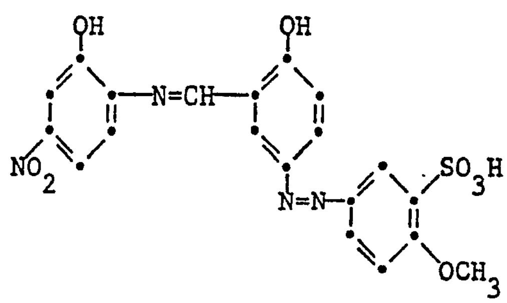 |
| 5 | 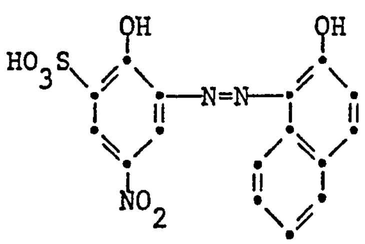 | 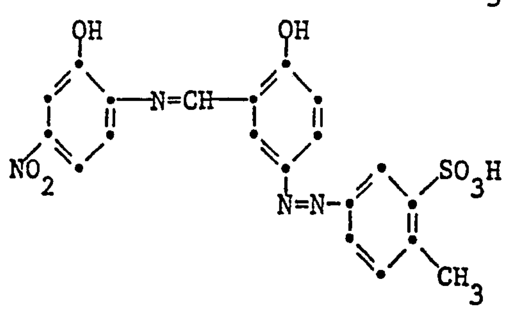 |

| No. | Azofarbstoff | Azomethinfarbstoff |
|---|---|---|
| 6 | 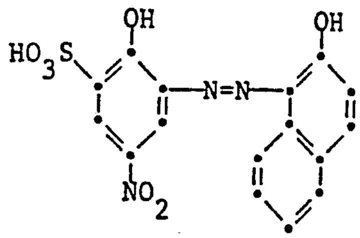 | 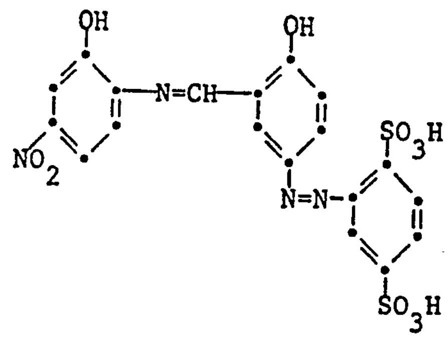 |
| 7 | 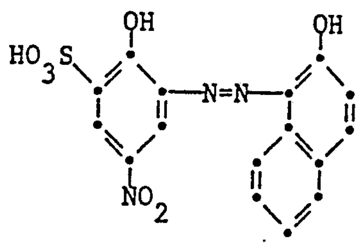 | 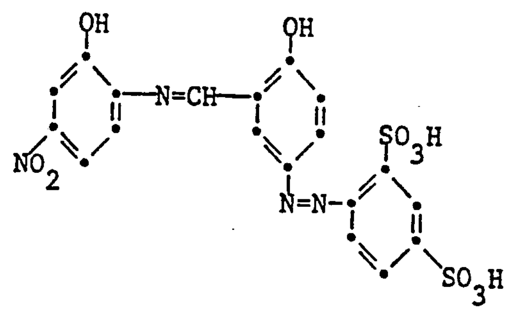 |
| 8 | 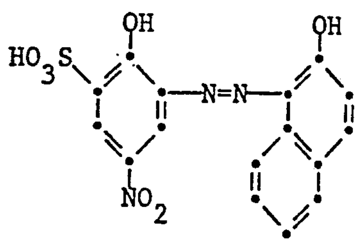 | 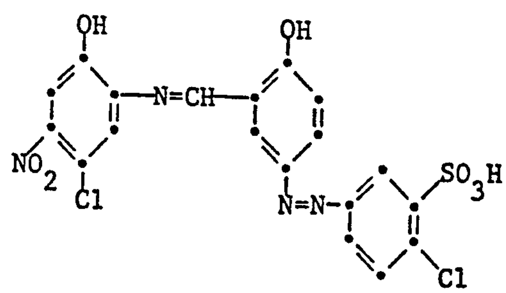 |
| 9 | 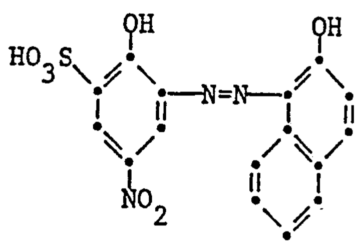 | 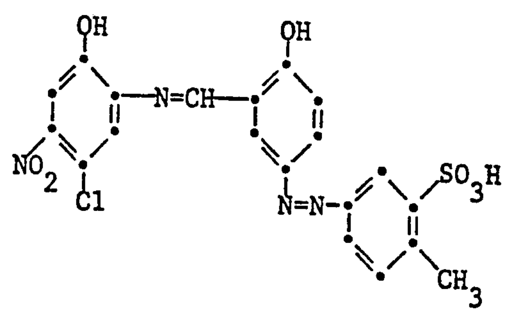 |
| 10 | 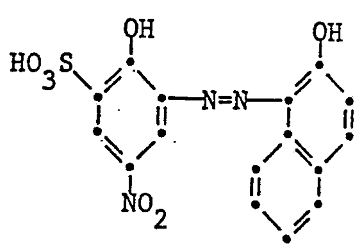 | 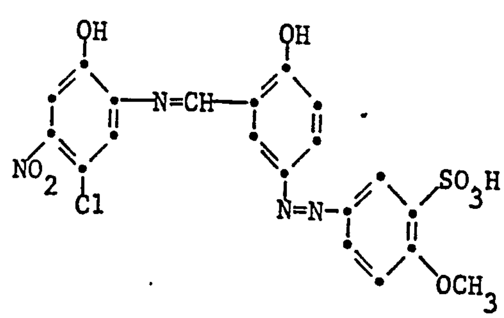 |

| No. | Azofarbstoff | Azomethinfarbstoff |
|---|---|---|
| 11 | 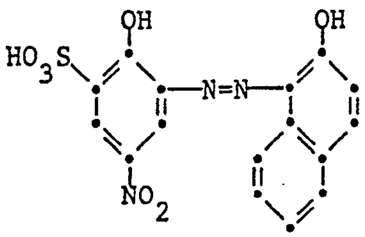 | 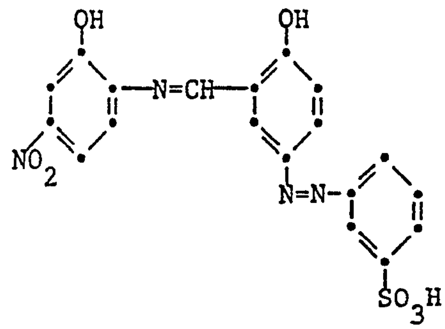 |
| 12 | 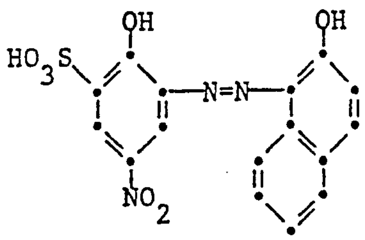 | 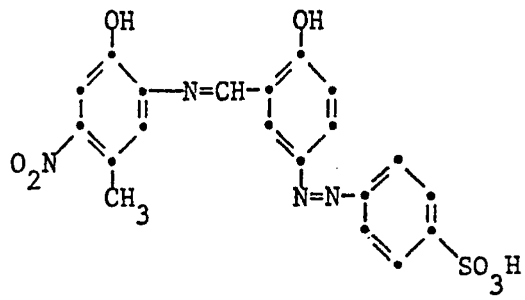 |
| 13 | 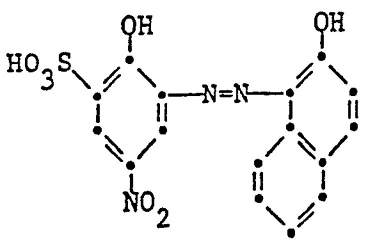 | 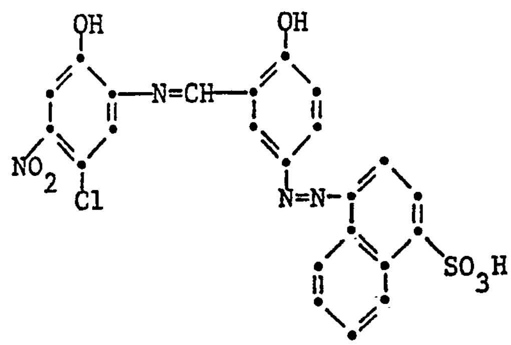 |
| 14 | 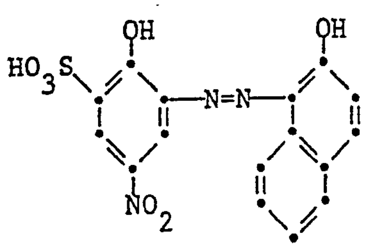 | 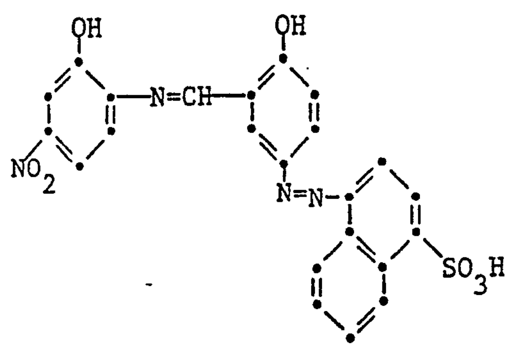 |
| 15 | 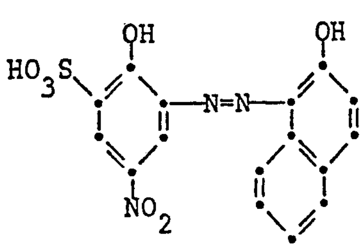 | 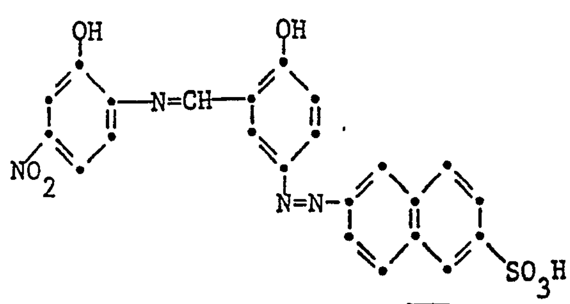 |

| No. | Azofarbstoff | Azomethinfarbstoff |
|---|---|---|
| 16 | 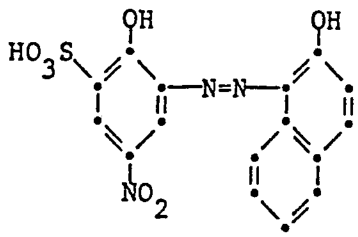 | 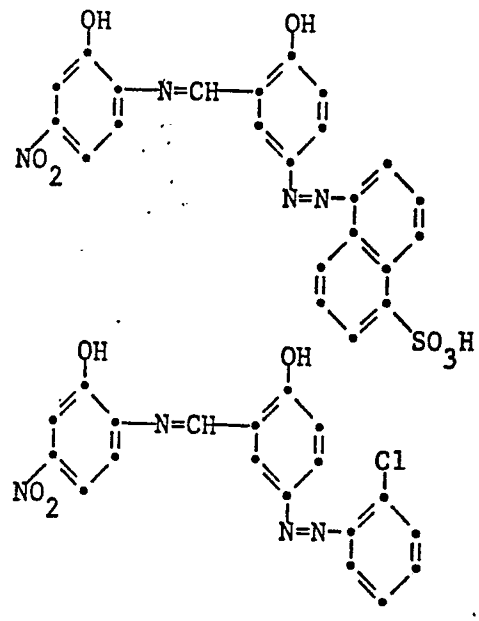 |
| 17 | 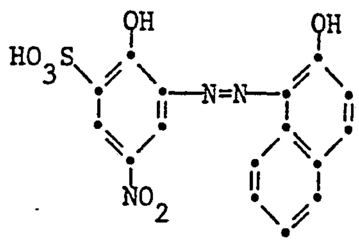 | |
| 18 | 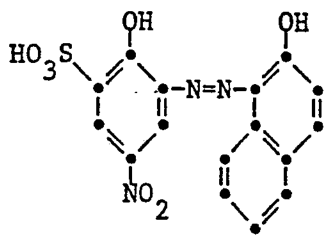 | 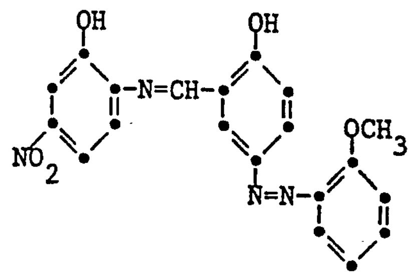 |
| 19 | 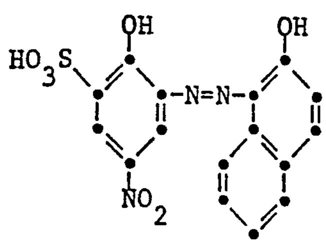 | 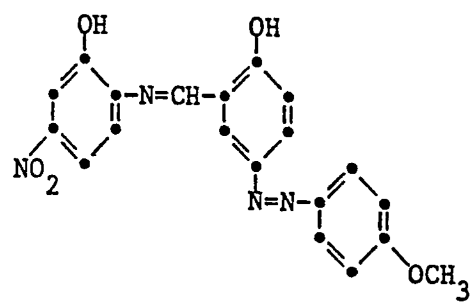 |
| 20 | 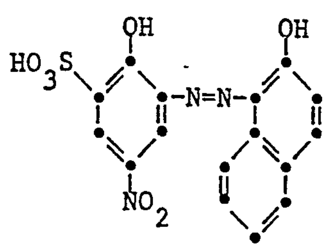 | 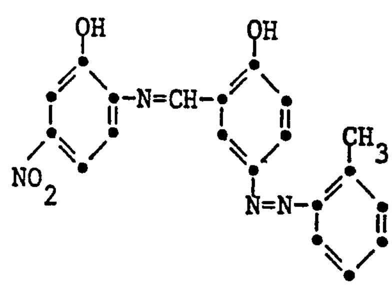 |

| No. | Azofarbstoff | Azomethinfarbstoffe |
|---|---|---|
| 21 | 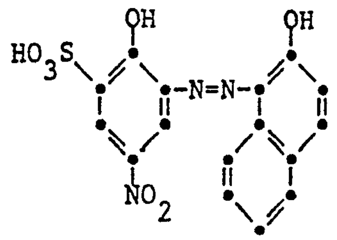 | 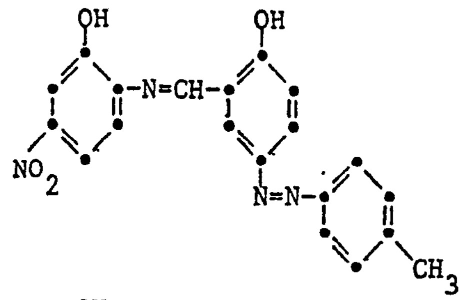 |
| 22 | 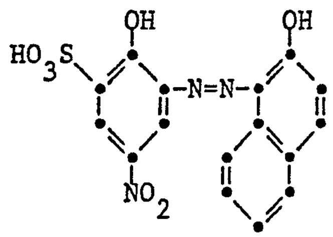 | 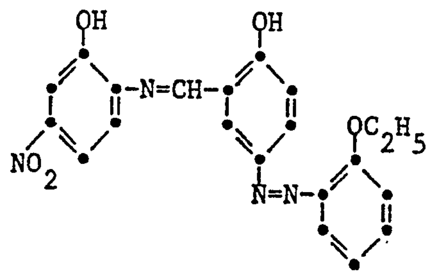 |
| 23 | 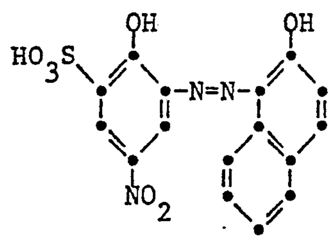 | 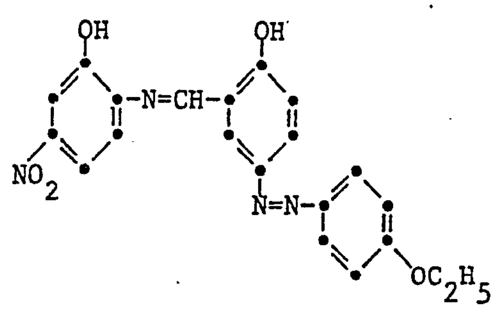 |
| 24 | 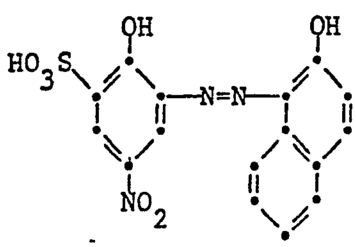 | 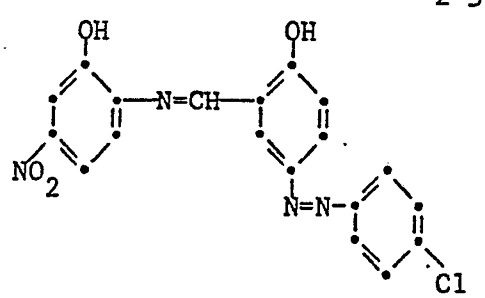 |
| 25 | 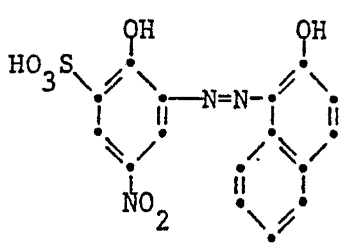 | 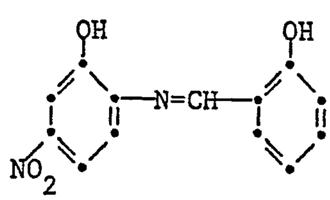 |
| 26 | 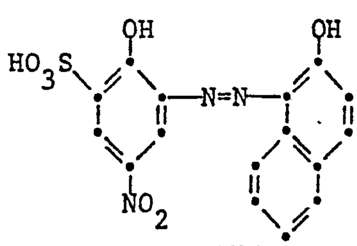 | 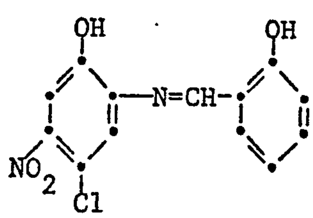 |

**Färbevorschrift für Leder**

100 Teile Bekleidungsveloursleder (Trockengewicht) werden bei 50° in einer Lösung von 1000 Volumenteilen Wasser und 2 Teilen Ammoniak 24 %ig während 2 Stunden aufgewalkt und anschliessend bei 60° in einer Lösung von 1000 Volumteilen Wasser, 2 Teilen Ammoniak 24 %ig und 6 Teilen Farbstoff aus Beispiel 2 während 1 Stunde gefärbt. Hierauf gibt man eine Lösung von 40 Volumteilen Wasser und 4 Teilen Ameisensäure 85 %ig zu und färbt noch weitere 30 Minuten. Dann wird das Leder gut gespült und gegebenenfalls noch mit 2 Teilen eines Dicyandiamidformaldehyd-Kondensationsproduktes während 30 Minuten bei 50° behandelt.

In gleicher Weise lassen sich andere Veloursleder sowie Handschuhleder färben.

Die so erhaltenen dunkelbraunen Färbungen zeichnen sich durch gute Echtheiten und gute Deckvermögen aus.

**Färbevorschrift für Polyamid**

100 Teile Polyamidstrickgarn werden bei 50° in ein Färbebad eingeführt, das auf 4000 Teile Wasser 2 Teile des Farbstoffes des Beispiels 1, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält ein braungefärbtes Polyamid mit guten Echtheitseigenschaften.

**Färbevorschrift für Wolle**

100 Teile Wollstickgarn werden bei 50° in ein Färbebad eingeführt, das auf 4000 Teile Wasser 2 Teile des Farbstoffs des Tabellenbeispiels 1, 4 Teile Essigsäure 80 % und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält eine braungefärbte Wolle mit guten Echtheitseigenschaften.

**Patentansprüche**

1. 1:2-Chromkomplexfarbstoffe der Formel I

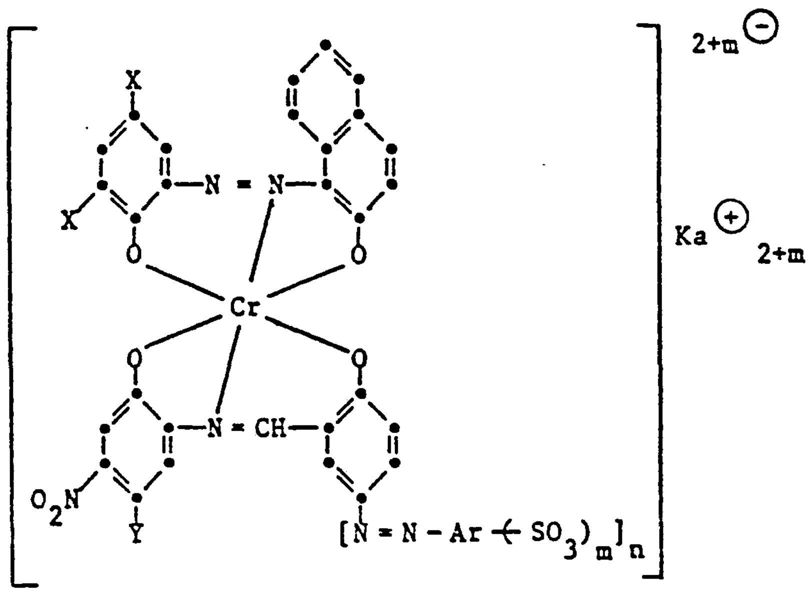

(I)

worin
ein X Nitro und das andere Sulfo,

Y Wasserstoff, Chlor oder Methyl,
Ar eine gegebenenfalls substituierte Arylgruppe, wobei die Carboxygruppe in o-Stellung zur Azogruppe sowie die Nitrogruppe als Substituenten ausgeschlossen sind,
m 0, 1 oder 2,
n 0 oder 1 und
Ka$^{\ominus}$ ein Kation bedeutet.

2. Farbstoffe gemäss Anspruch 1, worin m = 1 ist.

3. Farbstoffe gemäss Anspruch 2, worin Ar eine Phenyl- oder Naphthylgruppe bedeutet, welche durch Halogen, $C_1$-$C_4$-Alkyl, $C_1$-$C_4$-Alkoxy, Sulfo oder Carboxy substituiert sein können, wobei die Carboxygruppe nicht in o-Stellung zur Azogruppe stehen darf.

4. Farbstoffe gemäss Anspruch 3, worin Ar eine unsubstituierte oder durch Chlor, Methyl, Methoxy oder Sulfo substituierte Phenylgruppe oder eine unsubstituierte oder durch Sulfo substituierte Naphthylgruppe bedeutet.

5. Farbstoffe gemäss Anspruch 1 der Formel II

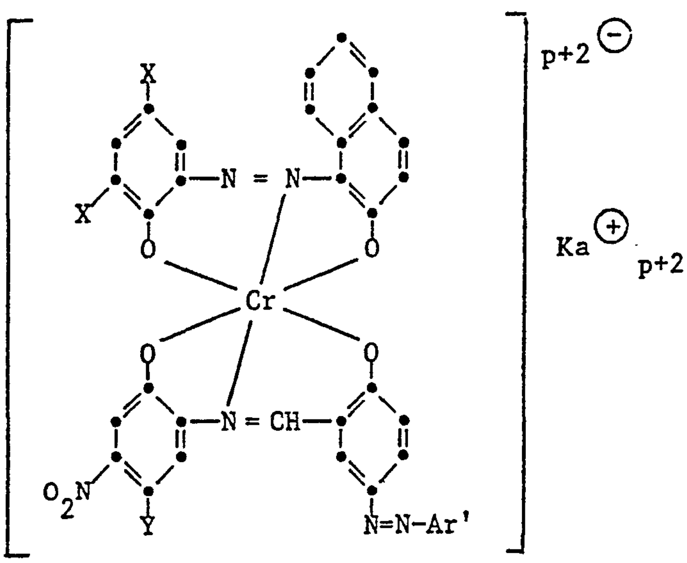

(II)

worin
ein X Nitro und das andere Sulfo,
Y Wasserstoff, Chlor oder Methyl,
Ar' unsubstituiertes oder durch Chlor, Methyl, Methoxy oder Sulfo substituiertes Phenyl oder durch Sulfo substituiertes Naphthyl,
Ka$^{\oplus}$ ein Kation und
p die Anzahl der ausser der Gruppe X vorhandenen Sulfogruppen bedeutet, wobei die Farbstoffe insgesamt 1 bis 3 Sulfogruppen aufweisen.

6. Verfahren zur Herstellung von 1:2-Chromkomplexfarbstoffen der Formel I, dadurch gekennzeichnet, dass man den 1:1-Chromkomplex des Azofarbstoffes herstellt und diesen dann mit dem Azomethinfarbstoff oder vorzugsweise mit einem Gemisch des entsprechenden Amins und Aldehyds umsetzt.

7. Verwendung von Farbstoffen der Formel I zum Färben von Wolle, Polyamid und insbesondere von Leder oder Pelzen.

## Claims

1. A 1:2 chrome complex dye of the formula I

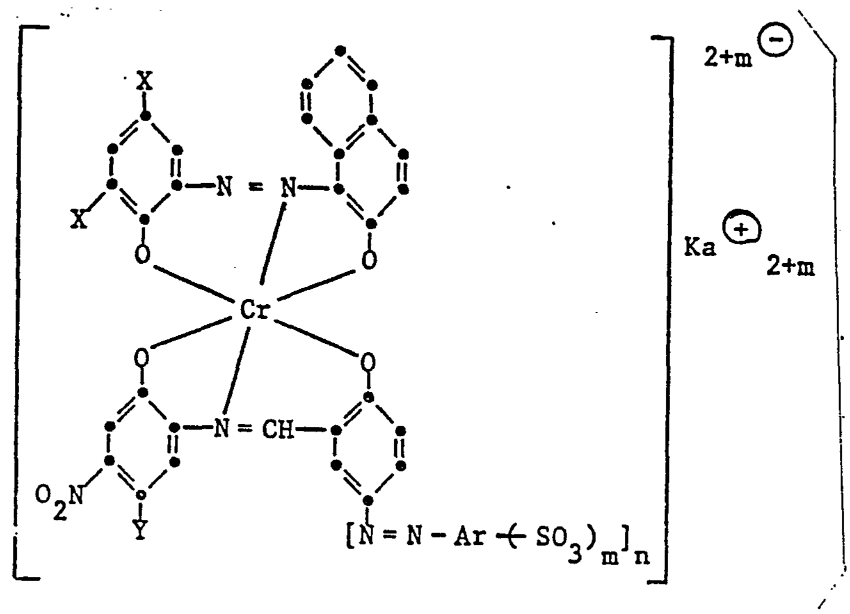

(I)

wherein
one X is nitro and the other is sulfo,
Y is hydrogen, chlorine or methyl,
Ar is an unsubstituted or substituted aryl group, the carboxyl group in the o-position with respect to the azo group, as well as the nitro group being excluded as substituents,
m is zero, 1 or 2,
n is zero or 1, and
$Ka^{\oplus}$ is a cation.

2. A dye according to claim 1 wherein m is 1.

3. A dye according to claim 2, wherein Ar is a phenyl or naphthyl group which may be substituted by halogen, $C_1$-$C_4$-alkyl, $C_1$-$C_4$-alkoxy, sulfo or carboxyl, which carboxyl group may not be in the o-position with respect to the azo group.

4. A dye according to claim 3, wherein Ar is a phenyl group which is unsubstituted or substituted by chlorine, methyl, methoxy or sulfo, or is a naphthyl group which is unsubstituted or substituted by sulfo.

5. A dye according to claim 1 of the formula II

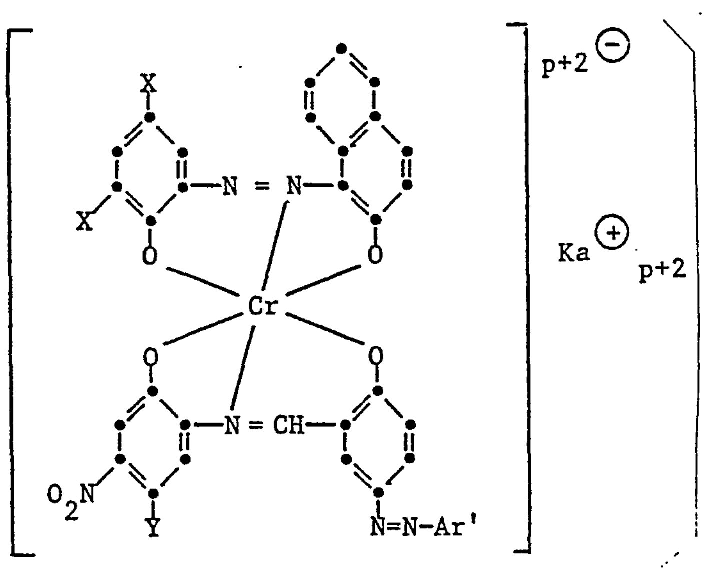

(II)

wherein
one X is nitro and the other is sulfo,
Y is hydrogen, chlorine or methyl,
Ar' is phenyl which is unsubstituted or substituted by chlorine, methyl, methoxy or sulfo, or is naphthyl substituted by sulfo,
$Ka^{\oplus}$ is a cation, and
p is the number of sulfo groups present besides the group X,
the dyes containing in all 1 to 3 sulfo groups.

6. A process for the preparation ot a 1:2 chrome complex dye of the formula I, which process comprises preparing the 1:1 chrome complex of the azo dye, and then reacting this complex with the azomethine dye or, preferably, with a mixture of the corresponding amine and aldehyde.

7. Use of dyes of the formula I for dyeing wool, polyamide and, in particular, leather or furs.

**Revendications**

1. Colorants à complexe de chrome 1:2 de formule I

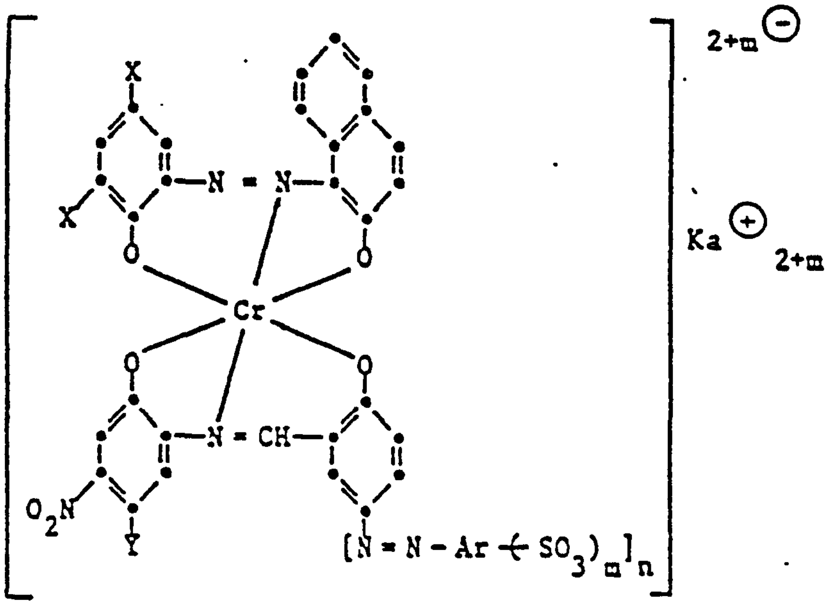

(I)

dans lequelle
un X represente le groupe nitro et l'autre le groupe sulfo,
Y représente un hydrogène, un chlore ou le reste méthyle,
Ar représente un groupe aryle éventuellement substitué, dans laquel sont exclus comme substituants le groupe carboxy en position ortho par rapport au groupe azoïque ainsi que le groupe nitro,
m représente 0, 1 ou 2,
n représente 0 ou 1 et
$Ka^{\oplus}$ représente un cation.

2. Colorants selon la revendication 1, dans lesquels m vaut 1.

3. Colorants selon la revendication 2, dans lesquels Ar reprensente un groupe phényle ou naphtyle, qui peuvent être substitués par un halogène, un reste alkyle ou alcoxy en $C_1$-$C_4$, un groupe sulfo ou carboxy, le groupe carboxy ne pouvant se trouver en position ortho par rapport au groupe azoïque.

4. Colorants selon la revendication 3, dans lesquels Ar représente un groupe phényle non substitué ou à substituant chlore, méthyle, méthoxy ou sulfo, ou un groupe naphtyle non substitué ou à substituant sulfo.

5. Colorants selon la revendication 1 de formule II

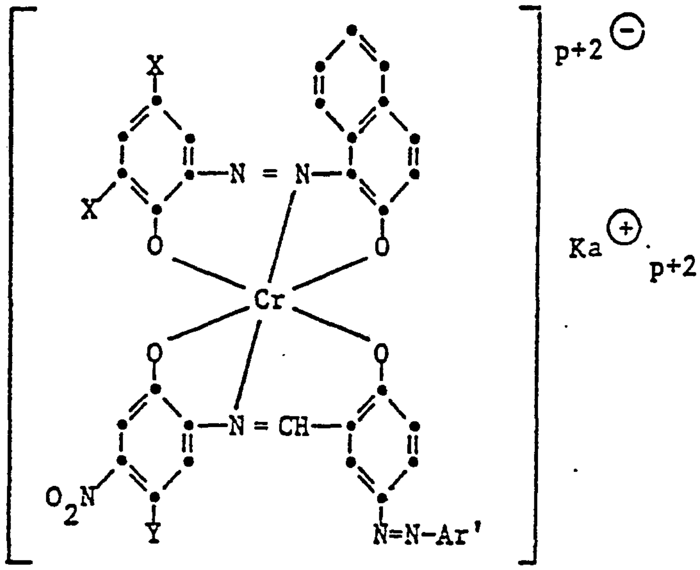

(II)

dans laquelle

un X représente le groupe nitro et l'autre le groupe sulfo,

Y représente un hydrogène, un chlore ou le reste méthyle,

Ar' représente le groupe phényle non substitué ou à substituant chlore, méthyle, méthoxy ou sulfo, ou le groupe naphtyle à substituant sulfo,

Ka$^{\oplus}$ représente un cation et

p représente le nombre de groupes sulfo présents en dehors du groupe X,

les colorants présentant au total de 1 à 3 groupes sulfo.

6. Procédé pour la préparation de colorants à complexe de chrome 1:2 de formule I, caractérisé par le fait que l'on prépare le complexe de chrome 1:1 du colorant azoïque et que l'on fait ensuite réagir celui-ci avec le colorant azométhinique ou de préférence avec un mélange de l'amine et de l'aldéhyde correspondants.

7. Utilisation des colorants de formule I pour la teinture de la laine, du polyamide, et en particulier du cuir ou des peaux.